# EUROPEAN PATENT SPECIFICATION

(11) **EP 4 084 998 B1**
(45) Date of publication and mention of the grant of the patent: **07.02.2024**
(21) Application number: 20700637.0
(22) Date of filing: 03.01.2020
(51) Int. Cl.: B60W 10/26, B60W 10/30, B60W 20/12, B60W 20/16, B60W 30/192, B60W 30/194, B60W 30/18

(54) **METHOD FOR CONTROLLING OPERATION OF A VEHICLE**
VERFAHREN ZUR STEUERUNG DES BETRIEBS EINES FAHRZEUGS
PROCÉDÉ PERMETTANT DE COMMANDER LE FONCTIONNEMENT D'UN VÉHICULE

(43) Date of publication of application: 09.11.2022
(73) Proprietor: VOLVO TRUCK CORPORATION, 405 08 Göteborg (SE)
(72) Inventor: ERIKSSON, Anders, 423 49 Torslanda (SE); WILHELMSSON, Martin, 423 39 Torslanda (SE); LUNDIN, Lars, 238 33 Oxie (SE)
(74) Representative: Zacco Sweden AB
(86) International application number: PCT/EP2020/050081
(87) International publication number: WO 2021/136597

(56) References cited:
- WO-A1-2014/080804
- DE-A1-102019 103 226
- JP-A- 2001 234 840
- US-A1- 2011 288 737
- US-A1- 2014 180 519

## Description

### TECHNICAL FIELD

The invention relates to a method for controlling operation of a vehicle comprising a powertrain system for propulsion of the vehicle, wherein the method comprises the steps of: providing information on geographical position of a first (starting) location and a second (destination) location and on length and topography for at least one possible route to be taken by the vehicle from the first location to the second location; and calculating, based on vehicle conditions and on length and topography for the at least one possible route, a plan for how to control the powertrain system to achieve an energy efficient performance of the powertrain system if driving the vehicle along said at least one possible route.

The invention can typically be applied in trucks and buses, and the powertrain system may be based on an internal combustion engine or an electric motor, or both if a hybrid powertrain system.

### BACKGROUND

It is of general interest to make a vehicle powertrain system operate as efficiently as possible to, for instance, reduce fuel consumption for combustion engine-based powertrain systems or optimize electricity consumption for an electric driveline/powertrain system. Besides making the various powertrain components work efficiently as such, it is for instance known to make use of a GPS system and map data for a presently driven route to gain information on the upcoming topography, such as the distance to the next significant up- or downhill slope, which can be used to control the powertrain system to achieve an energy efficient performance. For instance, if the temperature of an exhaust gas aftertreatment system of a combustion engine-based powertrain system is about to fall below a critical level, it might be possible to avoid injecting fuel into the exhaust system to raise its temperature (and thus avoid increasing the fuel consumption) and instead wait for reaching an imminent uphill slope where the engine in any case must be operated in a high-load mode that generates high temperature exhaust gas that will heat the exhaust system. For a vehicle with an electric driveline it might instead be useful to know that a long and steep downhill slope is soon to be reached where regenerative braking may be used to charge the battery.

Although a large number of ways to achieve an energy efficient performance of vehicle powertrain systems have been presented there is still a need for improvements in this field.

Documents WO2014/080804A1, DE102019103226A1, US2011/288737A1 and US2014/180519A1 describe a method for calculating a plan for controlling the powertrain system of a vehicle along a route in an energy efficient manner.

### SUMMARY

An object of the invention is to provide a method for controlling operation of a vehicle, which method secures that the vehicle powertrain system can be operated as efficiently as possible. This object is achieved by a method according to claim 1. Corresponding objects are achieved by a vehicle and by computer-related items according to other aspects of the invention defined in other claims.

The method concerns a method for controlling operation of a vehicle comprising a powertrain system for propulsion of the vehicle, wherein the method comprises the steps of: providing information on geographical position of a first (starting) location and a second (destination) location and on length and topography for at least one possible route to be taken by the vehicle from the first location to the second location; calculating, based on vehicle conditions and on length and topography for the at least one possible route, a plan for how to control the powertrain system to achieve an energy efficient performance of the powertrain system if driving the vehicle along said at least one possible route.

According to the invention, the method further comprises the steps of: setting the vehicle in a non-drive off mode that prevents the vehicle from driving off from the first location, and setting the vehicle in a normal operation mode that allows drive off from the first location when the step of calculating the plan for how to control the powertrain system has been carried out for the route to be taken by the vehicle.

The method according to above secures that calculation of how to control the powertrain system in an energy efficient manner is carried out before the vehicle leaves the first location (i.e. the starting location), which secures that the powertrain system can be operated as efficiently as possible when the vehicle travels along the route to the second location (i.e. the destination). Further, in situations where there are several possible routes, the method provides for the possibility to select already at the starting point that route that gives the highest powertrain system energy performance efficiency for the particular vehicle conditions.

The distance between the first and second location may be tens or hundreds of kilometres and the route may involve both city driving and highway driving.

The powertrain system may include an internal combustion engine and an associated exhaust gas aftertreatment system, EATS. Alternatively (for an electric vehicle with an electric driveline only) or complementary (for a hybrid vehicle), the powertrain system may include an electric motor and an associated energy storage unit, such as an electric battery. An electric driveline/powertrain system may instead be based on fuel cells for producing electricity to the electric motor. Such a system typically includes a hydrogen storage tank and a complementary electric battery.

Typically, the first location is the present location of the vehicle, which already is known by a vehicle provided with a GPS or other positioning system. Information on available roads, topography, distance between various points etc. is also normally available for most modern vehicles from stored map data. Thus, input data needed to be supplied to a control system capable of handling route information and calculating how to efficiently control the powertrain system is then primarily the second location, i.e. the destination. Destination information can be supplied to the control system manually by a driver or other person having access to the control system, or it can be supplied in various automatic manners; for instance, predetermined destination(s) may have been registered in the control system in beforehand.

In many cases it is also useful to supply information on a desired time-of-arrival at the destination to, based on route data, estimate a starting time and evaluate whether the time between present time and starting time should be used to improve performance of the powertrain system before driving off. Such performance improvements include, for instance, using connections to a power grid at the starting location for preheating an EATS (so as to avoid or reduce heating with fuel during driving) or charging or heating a battery before driving off.

The expression "energy efficient performance of the powertrain" may refer to low or reduced fuel consumption and/or high or increased exhaust gas conversion efficiency for a powertrain system comprising an internal combustion engine, or to a parameter related to battery charging or performance (state of charge needed before departure, battery or fuel cell temperature, possibilities to charge the battery along the route by regenerative braking, etc.) for a powertrain system comprising an electric motor powered by an electric battery (or a fuel cell).

Knowledge on route length and topography as well as vehicle conditions, such as weight, EATS temperature (or at least of certain components of the EATS), state of charge of battery etc., is required for reliably calculating the plan for how to control the powertrain system to achieve the efficient performance of the powertrain system if driving the vehicle along the route. For instance, steep and long uphill passages and a large vehicle weight lead to long-term high-load operation for the powertrain system which heats up the EATS of a powertrain system provided with an internal combustion engine (due to the large mass rate flow of hot exhaust produced during high-load conditions) or which considerably reduces the state of charge of a battery of a powertrain system provided with an electric driveline. On the other hand, steep and long downhill passages result in cooling down of the EATS, which may require supply of fuel into the EATS to keep the temperature high enough for achieving a sufficiently high conversion efficiency of hazardous compounds in the exhaust gas, and, for an electric driveline, great possibilities to charge the battery using a regenerative braking system (where the electric motor functions as an electric generator).

For an electric vehicle the plan for how to control the powertrain system may include how to distribute/consume the electricity while travelling along a particular route. Besides supplying electric propulsion power to the electric motor, the electricity may be used for heating, such as heating of the battery, the motor, a cab of a truck or a passenger compartment of a bus. An electric motor may operate more efficiently at certain engine speeds so selection of gear and route may play a role for the efficiency of the powertrain system for an electric vehicle.

In general the method may comprise taking into account temporary stops during the travel from the first to the second location, such as a stop for refuelling or for charging a battery. For instance, a battery may be preheated during driving before a stop for charging to speed up the charging process. The method may also comprise taking into account what is expected to occur at the second location and after the stop at the second location. For instance, if the stop involves loading/unloading before charging can start it requires a higher state of charge of the battery when arriving at the second location then in a situation where charging can start immediately after arrival.

The route information may also include e.g. speed limits, expected speed along the route, etc.

Setting the vehicle in the non-drive off mode may be done in different ways, it may e.g. be a default automatic setting that is activated when the vehicle reaches or is turned off at a destination or it might be activated by other means.

That the vehicle is "prevented" from driving off does not necessarily mean that it is impossible to drive off (which could be necessary for safety reasons in an emergency situation or be useful for other reasons in other situations) but that the vehicle is prevented from driving off without taking some form of particular action.

In an embodiment the method further comprises the steps of: providing a desired time-of-arrival at the second location; using the desired time-of-arrival as a boundary condition so as to calculate a desired starting time for driving off from the first location; and determining whether at least part of the time period between present time and the desired starting time can be used for pre-treating the powertrain system so as to achieve a further improvement of performance efficiency of the powertrain system.

In an embodiment the pre-treating of the powertrain system comprises one or more of the following steps:
- connecting the vehicle to an electric power grid at the first location;
- preheating of one or more components of an exhaust gas aftertreatment system forming part of the powertrain system;
- charging or heating of an electric energy storage unit forming part of the powertrain system; and/or
- preconditioning of a fuel cell.

Fuel cells typically requires some ventilation, humidification and ramping up before they can operate with full power. Typically, the electric energy from the power grid is thus used for heating, charging or preconditioning. The method may also comprise a pre-treating step involving buffering of a reducing agent (urea).

In an embodiment the method comprises the steps of: providing information on length and topography for at least two possible routes to be taken by the vehicle from the first location to the second location; calculating, for each of the at least two possible routes and based on vehicle conditions and on length and topography for the at least two possible routes, a plan for how to control the powertrain system to achieve an efficient performance of the powertrain system if driving the vehicle along each of said at least two possible routes, wherein the method further comprises: selecting, before driving off from the first location, one of the at least two possible routes.

In an embodiment the method further comprises the steps of: determining which one of the at least two possible routes that provides for the most efficient performance of the powertrain system; and selecting, before driving off from the first location, that route that provides for the most efficient performance of the powertrain system.

Besides length of route, selection of route may depend e.g. on the present conditions of the vehicle. If the vehicle must leave shortly and, for instance, the temperature of the EATS is low it is typically better to select a route that requires high-load operation (e.g. uphill driving) in the beginning and low-load operation at a later stage, and vice versa if the EATS temperature is high before start. As an example for a vehicle with electric driveline and capability to charge its battery by regenerative braking, it is typically an advantage to select a route that starts uphill if the battery is fully charged and use later downhill driving for charging the battery (which then is not fully charged and can thus be charged by regenerative braking).

In an embodiment the vehicle is positioned at the first location and is connectable to an electric grid at the first location.

In an embodiment the method comprises the step of: applying the calculated control plan when the vehicle travels towards the second location.

In an embodiment where pre-treating is contemplated the method comprises the step of: applying the pre-treating of the powertrain system before the vehicle drives off from the first location.

In an embodiment the vehicle, when set in the non-drive off mode, is allowed to move within a starting zone associated with the first location but prevented from moving outside of the starting zone. Loading/unloading may thus be allowed. The borders of the starting zone may be defined by positioning coordinates and the movement of the vehicle may be controlled using a vehicle control system comprising or communicating with a GPS positioning system arranged onto the vehicle.

In an embodiment the vehicle, when set in the non-drive off mode, is prevented from moving away from a stand-still position at the first location. This may be achieved by preventing a gear from being (easily) engaged or preventing a brake from being (easily) released. It may also be arranged that the vehicle must be set in a certain operation mode, e.g. a shunting or marshalling mode, where speed, torque and/or power is limited.

In an embodiment the vehicle, when set in the non-drive off mode, is allowed to drive slowly but not in a speed normally suitable for public roads.

In another aspect of the invention it relates to a vehicle provided with a powertrain system for propulsion of the vehicle, wherein the vehicle further is provided with a control system configured to perform the method steps according to above.

In a further aspect of the invention it relates one or more of the following:
- a computer program product comprising program code means for performing the steps of the method above when said program is run on a computer;
- a computer readable medium carrying a computer program comprising program code means for performing the steps of the method above when said program product is run on a computer; and/or
- a control unit for controlling operation of a vehicle comprising a powertrain system for propulsion of the vehicle, the control unit being configured to perform the steps of the above method.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 shows a truck that may be operated by a method according to this disclosure.
Fig. 2 shows a flow chart for a first embodiment of the method according to this disclosure.
Fig. 3 shows a flow chart for a second embodiment of the method according to this disclosure.

### DETAILED DESCRIPTION OF EXAMPLE EMBODIMENTS OF THE INVENTION

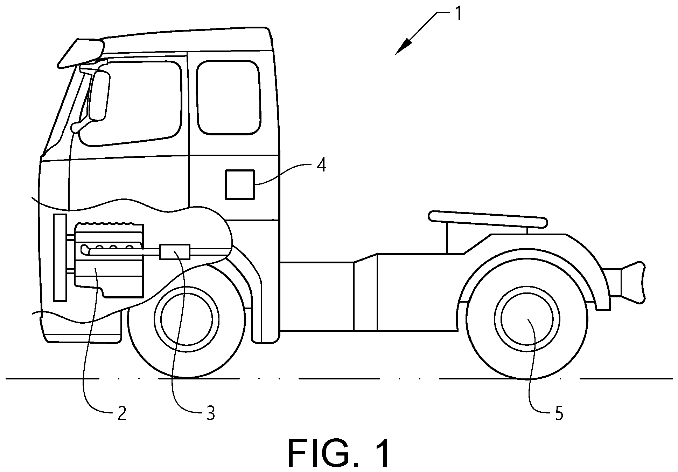

Figure 1 shows a vehicle in the form of a truck 1 comprising a powertrain system for propulsion of the vehicle 1 via a wheel 5 thereof. In this schematic example the truck 1 is provided with an internal combustion engine 2 and an exhaust gas aftertreatment system (EATS) 3. A control unit or control system 4 configured to control operation of the truck 1 is also indicated. The powertrain system also includes other conventional components that are not shown in the figure, such as a transmission system, drive shafts, etc.

As an alternative to what is shown in figure 1 the powertrain system may instead be electric and comprise an electric motor for driving of the wheels 5. In such a case the truck 1 may be provided with an electric battery configured to provide electric power to the motor. An electric driveline may alternatively or in addition be provided with electricity from fuel cells. A fuel cell system may comprise a hydrogen tank.

As an alternative to the truck 1 the vehicle may be for instance a bus.

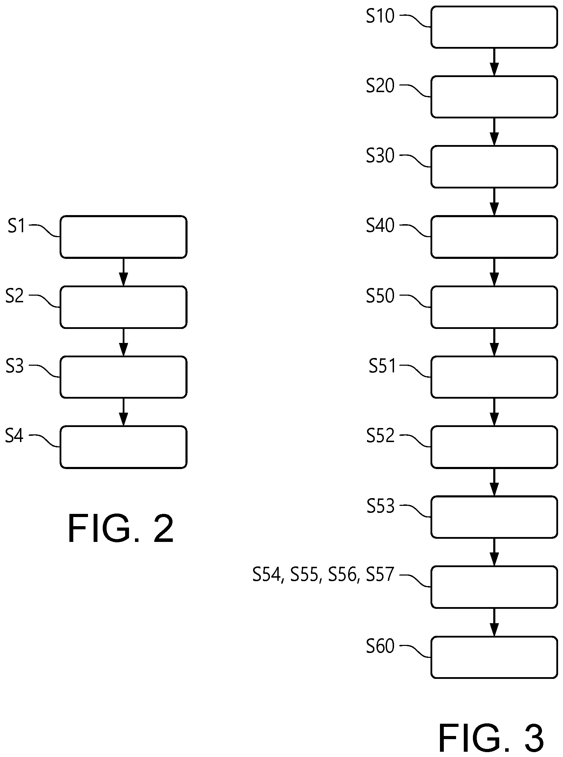

Figure 2 shows a flow chart for a first embodiment of the method comprising the steps of:
S1 - setting the vehicle in a non-drive off mode that prevents the vehicle from driving off from a first (starting) location;
S2 - providing information on geographical position of the first (starting) location and a second (destination) location and on length and topography for at least one possible route to be taken by the vehicle from the first location to the second location;
S3 - calculating, based on vehicle conditions and on length and topography for the at least one possible route, a plan for how to control the powertrain system to achieve an energy efficient performance of the powertrain system if driving the vehicle along said at least one possible route; and
S4 - setting the vehicle in a normal operation mode that allows drive off from the first location when the step of calculating the plan for how to control the powertrain system has been carried out for the route to be taken by the vehicle.

Thus, when step S3 has been performed for the route to be taken, the vehicle may be allowed to drive off from the first location.

As described further above, when the vehicle 1 is set in the non-drive off mode in step S1, it may still be allowed to move within a starting zone associated with the first location but prevented from moving outside of the starting zone, or it may be prevented from moving away from a stand-still position at the first location. If the non-drive off mode allows the vehicle 1 to move, this mode may comprise allowing the vehicle 1 to drive slowly but not in a speed normally suitable for public roads.

It is not necessary that the steps of the method are carried out in the order indicated in figure 2, step S2 may for instance be carried out before step S1. The important thing is that the powertrain system control plan has been established for the route to be taken before the vehicle leaves the starting location.

Figure 3 shows a flow chart for a second embodiment of the method, which is a more detailed example and which comprises the steps of:
S10 - setting the vehicle in a non-drive off mode that prevents the vehicle from driving off from a first (starting) location;
S20 - providing information on geographical position of the first (starting) location and a second (destination) location and on length and topography for at least two possible routes to be taken by the vehicle from the first location to the second location;
S30 - calculating, for each of the at least two possible routes and based on vehicle conditions and on length and topography for the at least two possible routes, a plan for how to control the powertrain system to achieve an efficient performance of the powertrain system if driving the vehicle along each of said at least two possible routes;
S31 - selecting, before driving off from the first location, one of the at least two possible routes;
S40 - setting the vehicle in a normal operation mode that allows drive off from the first location when the step of calculating the plan for how to control the powertrain system has been carried out for the selected route.
S50 - providing a desired time-of-arrival at the second location;
S51 - using the desired time-of-arrival as a boundary condition so as to calculate a desired starting time for driving off from the first location;
S52 - determining whether at least part of the time period between present time and the desired starting time can be used for pre-treating the powertrain system so as to achieve a further improvement of performance efficiency of the powertrain system;
S53 - applying the pre-treating of the powertrain system before the vehicle drives off from the first location by performing one or more of the following steps:.
   S54 - connecting the vehicle to an electric power grid at the first location;
   S55 - preheating of one or more components of an exhaust gas aftertreatment system forming part of the powertrain system;
   S56 - charging or heating of an electric energy storage unit forming part of the powertrain system, and/or
   S57 - preconditioning of a fuel cell forming part of the powertrain system.
S60 - applying the calculated control plan when the vehicle travels towards the second location.

As in the previous example it is not necessary that the steps of the method are carried out exactly in the order indicated in figure 3, step S20 may for instance be carried out before step S10. In a variant of the example of figure 3 step S4 can be carried out in a later stage when pre-treating has been carried out. That is, the vehicle may be set in its normal operation mode that allows drive off as late as at the desired starting time for driving off from the first location.

It is to be understood that the present invention is not limited to the embodiments described above and illustrated in the drawings; rather, the skilled person will recognize that many changes and modifications may be made within the scope of the appended claims.

## Claims

1. A method for controlling operation of a vehicle (1) comprising a powertrain system (2, 3) for propulsion of the vehicle (1),
wherein the method comprises the steps of:
- providing (S2, S20) information on geographical position of a first (starting) location and a second (destination) location and on length and topography for at least one possible route to be taken by the vehicle (1) from the first location to the second location;
- calculating (S3, S30), based on vehicle conditions and on length and topography for the at least one possible route, a plan for how to control the powertrain system to achieve an energy efficient performance of the powertrain system (2, 3) if driving the vehicle (1) along said at least one possible route,
**characterized in**
**that** the method comprises the steps of:
- setting (S1, S10) the vehicle (1) in a non-drive off mode that prevents the vehicle from driving off from the first location, and
- setting (S4, S40) the vehicle (1) in a normal operation mode that allows drive off from the first location when the step of calculating the plan for how to control the powertrain system (2, 3) has been carried out for the route to be taken by the vehicle (1).

2. The method according to claim 1, wherein the method further comprises:
- providing a desired time-of-arrival at the second location;
- using the desired time-of-arrival as a boundary condition so as to calculate a desired starting time for driving off from the first location;
- determining whether at least part of the time period between present time and the desired starting time can be used for pre-treating the powertrain system so as to achieve a further improvement of performance efficiency of the powertrain system.

3. The method according to claim 2, wherein the pre-treating of the powertrain system comprises one or more of the following steps:
- connecting the vehicle to an electric power grid at the first location;
- preheating of one or more components of an exhaust gas aftertreatment system forming part of the powertrain system;
- charging or heating of an electric energy storage unit forming part of the powertrain system; and/or
- preconditioning of a fuel cell forming part of the powertrain system.

4. The method according to any of the above claims, wherein the method comprises the steps of:
- providing information on length and topography for at least two possible routes to be taken by the vehicle from the first location to the second location;
- calculating, for each of the at least two possible routes and based on vehicle conditions and on length and topography for the at least two possible routes, a plan for how to control the powertrain system to achieve an efficient performance of the powertrain system if driving the vehicle along each of said at least two possible routes,
wherein the method further comprises:
- selecting, before driving off from the first location, one of the at least two possible routes.

5. The method according to claim 4, wherein the method comprises the steps of:
- determining which one of the at least two possible routes that provides for the most efficient performance of the powertrain system; and
- selecting, before driving off from the first location, that route that provides for the most efficient performance of the powertrain system.

6. The method according to any of the above claims, wherein the vehicle is positioned at the first location and is connectable to an electric grid at the first location.

7. The method according to any of the above claims, wherein the method comprises the step of:
- applying the calculated control plan when the vehicle travels towards the second location.

8. The method according to claim 2 or 3, wherein the method comprises the step of:
- applying the pre-treating of the powertrain system before the vehicle drives off from the first location.

9. The method according to any of the above claims, wherein the vehicle, when set in the non-drive off mode, is allowed to move within a starting zone associated with the first location but prevented from moving outside of the starting zone.

10. The method according to any of claims 1-8, wherein the vehicle, when set in the non-drive off mode, is prevented from moving away from a stand-still position at the first location.

11. The method according to any of claims 1-8, wherein the vehicle, when set in the non-drive off mode, is allowed to drive slowly but not in a speed normally suitable for public roads.

12. A vehicle provided with a powertrain system for propulsion of the vehicle, wherein the vehicle further is provided with the control unit according to claim 15.

13. A computer program product comprising program code means for performing the steps of any of claims 1-11 when said program code is run on a computer

14. A computer readable medium carrying the computer program product according to claim 13.

15. A control unit for controlling operation of a vehicle comprising a powertrain system for propulsion of the vehicle, the control unit being configured to perform the steps of the method according to any of claims 1-11.

## Patentansprüche

1. Verfahren zur Steuerung des Betriebs eines Fahrzeugs (1), das ein Antriebsstrangsystem (2, 3) zum Antrieb des Fahrzeugs (1) umfasst,
wobei das Verfahren die folgenden Schritte umfasst:
- Bereitstellen (S2, S20) von Informationen zu einer geografischen Position eines ersten (Ausgangs-)Orts und eines zweiten (Ziel-)Orts und zu einer Länge und Topografie für mindestens eine von dem Fahrzeug (1) von dem ersten Ort zu dem zweiten Ort zu nehmende mögliche Route;
- Berechnen (S3, S30), auf Grundlage von Fahrzeugbedingungen und der Länge und Topografie für die mindestens eine mögliche Route, eines Plans dafür, wie das Antriebsstrangsystem zu steuern ist, um eine energieeffiziente Leistung des Antriebsstrangsystems (2, 3) zu erreichen, wenn das Fahrzeug (1) entlang der mindestens einen möglichen Route gefahren wird, **dadurch gekennzeichnet, dass**
das Verfahren die folgenden Schritte umfasst:
- Versetzen (S1, S10) des Fahrzeugs (1) in einen Nicht-Wegfahr-Modus, der das Fahrzeug daran hindert, von dem ersten Ort wegzufahren, und
- Versetzen (S4, S40) des Fahrzeugs (1) in einen normalen Betriebsmodus, der ein Wegfahren von dem ersten Ort erlaubt, wenn der Schritt des Berechnens des Plans dafür, wie das Antriebsstrangsystem (2, 3) zu steuern ist, für die von dem Fahrzeug (1) zu nehmende Route ausgeführt wurde.

2. Verfahren nach Anspruch 1, wobei das Verfahren ferner Folgendes umfasst:
- Bereitstellen einer gewünschten Ankunftszeit an dem zweiten Ort;
- Verwenden der gewünschten Ankunftszeit als Grenzbedingung, um eine gewünschte Startzeit zum Wegfahren von dem ersten Ort zu berechnen;
- Bestimmen, ob mindestens ein Teil des Zeitraums zwischen der aktuellen Zeit und der gewünschten Startzeit für ein Vorbehandeln des Antriebsstrangsystems verwendet werden kann, um eine weitere Verbesserung der Leistungseffizienz des Antriebsstrangsystems zu erreichen.

3. Verfahren nach Anspruch 2, wobei das Vorbehandeln des Antriebsstrangsystems einen oder mehrere der folgenden Schritte umfasst:
- Verbinden des Fahrzeugs mit einem Stromnetz an dem ersten Ort;
- Vorheizen einer oder mehrerer Komponenten eines Abgasnachbehandlungssystems, das einen Teil des Antriebsstrangsystems bildet;
- Laden oder Heizen einer Speichereinheit für elektrische Energie, die einen Teil des Antriebsstrangsystems bildet; und/oder
- Vorkonditionieren einer Kraftstoffzelle, die einen Teil des Antriebsstrangsystems bildet.

4. Verfahren nach einem der vorhergehenden Ansprüche, wobei das Verfahren die folgenden Schritte umfasst:
- Bereitstellen von Informationen zu einer Länge und Topografie für mindestens zwei von dem Fahrzeug von dem ersten Ort zu dem zweiten Ort zu nehmende mögliche Routen;
- Berechnen, für jede der mindestens zwei möglichen Routen und auf Grundlage von Fahrzeugbedingungen und der Länge und Topografie für die mindestes zwei möglichen Routen, eines Plans dafür, wie das Antriebsstrangsystem zu steuern ist, um eine effiziente Leistung des Antriebsstrangsystems zu erreichen, wenn das Fahrzeug entlang jeder der mindestens zwei möglichen Routen gefahren wird,
wobei das Verfahren ferner Folgendes umfasst:
- Auswählen, vor dem Wegfahren von dem ersten Ort, einer der mindestens zwei möglichen Routen.

5. Verfahren nach Anspruch 4, wobei das Verfahren die folgenden Schritte umfasst:
- Bestimmen, welche der mindestens zwei möglichen Routen die effizienteste Leistung des Antriebsstrangsystems bereitstellt; und
- Auswählen, vor dem Wegfahren von dem ersten Ort, der Route, die die effizientes Leitung des Antriebsstrangsystems bereitstellt.

6. Verfahren nach einem der vorhergehenden Ansprüche, wobei das Fahrzeug an dem ersten Ort positioniert ist und an dem ersten Ort mit einem Stromnetz verbindbar ist.

7. Verfahren nach einem der vorhergehenden Ansprüche, wobei das Verfahren den folgenden Schritt umfasst:
- Anwenden des berechneten Steuerungsplans, wenn das Fahrzeug in Richtung des zweiten Orts fährt.

8. Verfahren nach Anspruch 2 oder 3, wobei das Verfahren den folgenden Schritt umfasst:
- Anwenden des Vorbehandelns des Leistungsstrangsystems, bevor das Fahrzeug von dem ersten Ort wegfährt.

9. Verfahren nach einem der vorhergehenden Ansprüche, wobei dem Fahrzeug, wenn es in den Nicht-Wegfahr-Modus versetzt ist, erlaubt wird, sich innerhalb einer Startzone zu bewegen, die dem ersten Ort zugeordnet ist, aber es daran gehindert wird, sich aus der Startzone zu bewegen.

10. Verfahren nach einem der Ansprüche 1-8, wobei das Fahrzeug, wenn es in den Nicht-Wegfahr-Modus versetzt ist, daran gehindert wird, sich an dem ersten Ort aus einer Stillstandsposition wegzubewegen.

11. Verfahren nach einem der Ansprüche 1-8, wobei dem Fahrzeug, wenn es in den Nicht-Wegfahr-Modus versetzt ist, erlaubt wird, langsam aber nicht mit einer Geschwindigkeit zu fahren, die normalerweise für öffentliche Straßen geeignet ist.

12. Fahrzeug, das mit einem Antriebsstrang zum Antrieb des Fahrzeugs bereitgestellt ist, wobei das Fahrzeug ferner mit der Steuereinheit nach Anspruch 15 bereitgestellt ist.

13. Computerprogrammprodukt, umfassend Programmcodemittel zum Durchführen der Schritte nach einem der Ansprüche 1-11, wobei der Programmcode auf einem Computer ausgeführt wird.

14. Computerlesbares Medium, das das Computerprogrammprodukt nach Anspruch 13 trägt.

15. Steuereinheit zur Steuerung des Betriebs eines Fahrzeugs, das ein Antriebsstrangsystem zum Antrieb des Fahrzeugs umfasst, wobei die Steuereinheit dazu konfiguriert ist, die Schritte des Verfahrens nach einem der Ansprüche 1-11 durchzuführen.

## Revendications

1. Procédé permettant de commander le fonctionnement d'un véhicule (1) comprenant un système de groupe motopropulseur (2, 3) pour la propulsion du véhicule (1),
dans lequel le procédé comprend les étapes de :
- fourniture (S2, S20) d'informations sur la position géographique d'un premier emplacement (de départ) et d'un second emplacement (de destination) ainsi que sur la longueur et la topographie d'au moins un itinéraire possible à emprunter par le véhicule (1) depuis le premier emplacement jusqu'au second emplacement ;
- calcul (S3, S30), sur la base de conditions de véhicule et de la longueur et de la topographie pour l'au moins un itinéraire possible, d'un plan sur la façon de commander le système de groupe motopropulseur pour obtenir une performance économe en énergie du système de groupe motopropulseur (2, 3) en cas de conduite du véhicule (1) le long dudit au moins un itinéraire possible,
**caractérisé en**
**ce que** le procédé comprend les étapes de :
- placement (S1, S10) du véhicule (1) dans un mode sans éloignement qui empêche le véhicule de s'éloigner du premier emplacement, et
- placement (S4, S40) du véhicule (1) dans un mode de fonctionnement normal qui permet de s'éloigner du premier emplacement lorsque l'étape de calcul du plan sur la façon de commander le système de groupe motopropulseur (2, 3) a été réalisée pour l'itinéraire à emprunter par le véhicule (1).

2. Procédé selon la revendication 1, dans lequel le procédé comprend en outre :
- la fourniture d'une heure d'arrivée souhaitée au second emplacement ;
- l'utilisation de l'heure d'arrivée souhaitée comme condition limite de manière à calculer une heure de départ souhaitée pour l'éloignement du premier emplacement ;
- le fait de déterminer si au moins une partie de la période de temps entre l'heure actuelle et l'heure de démarrage souhaitée peut être utilisée pour prétraiter le système de groupe motopropulseur de façon à obtenir une amélioration supplémentaire de l'efficacité des performances du système de groupe motopropulseur.

3. Procédé selon la revendication 2, dans lequel le prétraitement du système de groupe motopropulseur comprend une ou plusieurs des étapes suivantes :
- connexion du véhicule à un réseau électrique au niveau du premier emplacement ;
- préchauffage d'un ou plusieurs composants d'un système de post-traitement de gaz d'échappement faisant partie du système de groupe motopropulseur ;
- chargement ou chauffage d'une unité de stockage d'énergie électrique faisant partie du système de groupe motopropulseur ; et/ou
- préconditionnement d'une pile à combustible faisant partie du système de groupe motopropulseur.

4. Procédé selon l'une quelconque des revendications précédentes, dans lequel le procédé comprend les étapes de :
- fourniture d'informations sur la longueur et la topographie d'au moins deux itinéraires possibles devant être empruntés par le véhicule depuis le premier emplacement jusqu'au second emplacement ;
- calcul, pour chacun des lu moins deux itinéraires possibles et sur la base de conditions de véhicule et de la longueur et de la topographie des au moins deux itinéraires possibles, d'un plan sur la façon de commander le système de groupe motopropulseur pour obtenir une performance efficace du système de groupe motopropulseur lors de la conduite du véhicule le long de chacun desdits au moins deux itinéraires possibles,
dans lequel le procédé comprend en outre :
- la sélection, avant l'éloignement du premier emplacement, de l'un des au moins deux itinéraires possibles.

5. Procédé selon la revendication 4, dans lequel le procédé comprend les étapes de :
- détermination duquel des au moins deux itinéraires possibles fournit les performances les plus efficaces du système de groupe motopropulseur ; et
- sélection, avant l'éloignement du premier emplacement, de cet itinéraire qui fournit les performances les plus efficaces du système de groupe motopropulseur.

6. Procédé selon l'une quelconque des revendications précédentes, dans lequel le véhicule est positionné au niveau du premier emplacement et peut être connecté à un réseau électrique au niveau du premier emplacement.

7. Procédé selon l'une quelconque des revendications précédentes, dans lequel le procédé comprend l'étape :
- d'application du plan de commande calculé lorsque le véhicule se déplace vers le second emplacement.

8. Procédé selon la revendication 2 ou 3, dans lequel le procédé comprend l'étape :
- d'application du prétraitement du système de groupe motopropulseur avant que le véhicule ne s'éloigne du premier emplacement.

9. Procédé selon l'une quelconque des revendications précédentes, dans lequel le véhicule, lorsqu'il est réglé dans le mode sans éloignement, est autorisé à se déplacer dans une zone de départ associée au premier emplacement mais empêché de se déplacer en dehors de la zone de départ.

10. Procédé selon l'une quelconque des revendications 1 à 8, dans lequel le véhicule, lorsqu'il est placé dans le mode sans éloignement, est empêché de s'écarter d'une position d'arrêt au niveau du premier emplacement.

11. Procédé selon l'une quelconque des revendications 1 à 8, dans lequel le véhicule, lorsqu'il est réglé dans le mode sans démarrage, est autorisé à rouler lentement mais pas à une vitesse normalement adaptée aux routes publiques.

12. Véhicule équipé d'un système de groupe motopropulseur pour la propulsion du véhicule, dans lequel le véhicule est en outre équipé de l'unité de commande selon la revendication 15.

13. Produit-programme informatique comprenant des moyens de code de programme pour réaliser les étapes selon l'une quelconque des revendications 1 à 11 lorsque ledit code de programme est exécuté sur un ordinateur.

14. Support lisible par ordinateur portant le produit-programme informatique selon la revendication 13.

15. Unité de commande pour commander le fonctionnement d'un véhicule comprenant un système de groupe motopropulseur pour la propulsion du véhicule, l'unité de commande étant configurée pour réaliser les étapes du procédé selon l'une quelconque des revendications 1 à 11.
